# EUROPEAN PATENT SPECIFICATION

(11) **EP 1 770 870 B1**
(45) Date of publication and mention of the grant of the patent: **03.04.2019**
(21) Application number: 05256179.2
(22) Date of filing: 03.10.2005
(51) Int. Cl.: H04B 3/54

(54) **Powerline communication device and method**
Verfahren und Vorrichtung zur Stromleitungskommunikation
Procédé et dispositif de communication sur ligne d'alimentation

(43) Date of publication of application: 04.04.2007
(73) Proprietor: Avago Technologies International Sales Pte. Limited, Singapore 768923 (SG)
(72) Inventor: Hurwitz, Jonathan Ephraim David, Edinburgh EH13 0JT (GB)
(74) Representative: Bosch Jehle Patentanwaltsgesellschaft mbH

(56) References cited:
- EP-A- 0 580 457
- EP-A- 1 134 909
- EP-A- 1 432 138

## Description

### Field of the Invention

The present invention relates to a device and method for powerline communication and in particular, a device and method for wideband powerline communication.

### Background of the Invention

Since the present invention relates to powerline communication, it is useful at this point to briefly review powerline communication systems with a view to establishing the context in which the present invention is used. The following discussion will also briefly describe a number of the problems encountered in communicating over powerlines and will describe how a number of prior art systems have attempted to address these problems.

The following discussion will also briefly discuss the problem of enabling different powerline communication standards to co-exist and approaches adopted by a number of prior art systems to enables such co-existence.

It will be seen from the following discussion that the prior art powerline communication techniques are all mono-band in nature. For completeness, the following discussion will also describe a number of prior art multi-frequency or frequency translation communication techniques. The following discussion will end with a description of the problems with the afore-mentioned prior art systems.

Accordingly, the back ground to the invention will now be described by way of example only, with reference to the accompanying Figure in which:

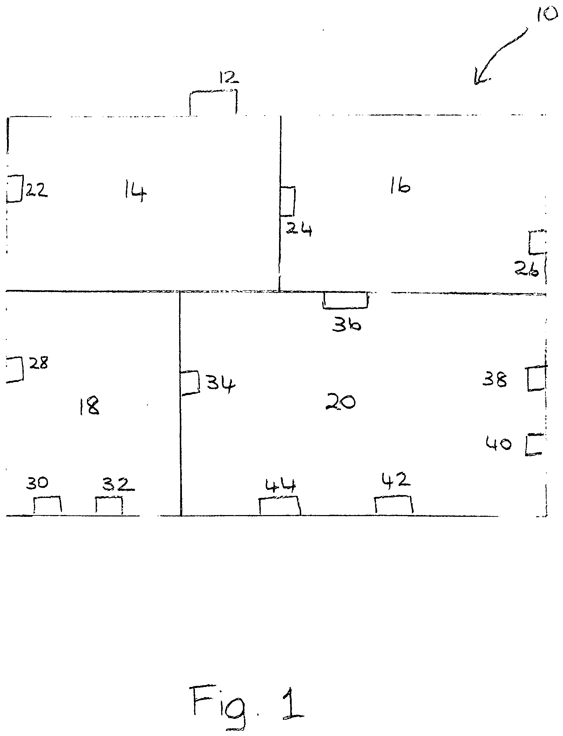

Figure 1 is a block diagram of a household wiring layout in which a powerline communication system could be used.

### 1. Powerline Communication (PLC) Systems

### (a) General Overview

With the growing use of digital content (e.g. MP3 audio, MPEG4 video and digital photographs) there is a widely-recognised need to improve digital communication systems. Powerline communication (PLC) is a technology that modulates a radio signal with data and transmits the signal on existing electricity powerlines in a band of frequencies that are not used for supplying electricity.

Accordingly, PLC leverages the ubiquity of existing electricity networks to provide extensive network coverage. Furthermore, since PLC enables data to be accessed from conventional power-outlets, no new wiring needs to be installed in a building (or different parts of a building). Accordingly, PLC offers the additional advantage of reduced installation costs.

Referring to Figure 1, a household 10 typically has a distributed mains wiring system consisting of one or more ring mains, several stubs and some distribution back to a junction box 12. For the sake of example, let the household 10 comprise four rooms 14, 16, 18 and 20. Every room 14-20 may have a different number of outlets and other mains connections. For example, room 14 may have only one connection 22, room 16 may have two connections 24, 26, room 18 may have three connections 28, 30, 32 and room 20 may have six connections 34, 36, 38, 40, 42, 44.

Accordingly, there are a variety of distances and paths between different power outlets in the household 10. In particular, the outlets most closely located to each other are those on multi-plug strips, and the outlets furthest away from each other are those on the ends of stubs of different ring mains (e.g. power outlets in the garden shed and the attic). Nonetheless, the majority of outlets associated with a particular application (e.g. Home Cinema) are located relatively close together.

For the sake of clarity, the term "*powerline*" will be used henceforth to refer to low voltage household mains distribution cabling (typically 100-240 V AC power) or any other distributed electrically conductive cabling (i.e. AC or DC), that is capable of passing power to appliances connected to it. Furthermore, the term "*powerline technology*" will be used henceforth to refer to a specification that when implemented as a series of network interface devices connected to a powerline, enables the devices to bi-directionally communicate with each other using signals superimposed on the power distribution signal already present on the powerline.

Similarly, the term "*network interface device*" will be used henceforth to describe an apparatus that implements either fully or partially, a communications technology, such as a powerline technology, to enable the apparatus to communicate with other devices connected to the same network (such as a powerline), regardless of whether or not the apparatus is integrated with other apparatuses or functions within a single enclosure. For the sake of clarity, a device connected to a powerline network will be generically known henceforth as a "*node*".

Similarly, the term "*coverage*" will henceforth be used to refer to the maximum distance between two nodes at which data transmitted therebetween is still detectable by either node. In addition, the term "*throughput*" will be understood to represent the rate at which nodes send or receive data on a network.

For completeness and since the present invention relates to wideband communication, the term "wideband" will be used henceforth to refer to a frequency band used by a powerline technology signal, characterised by having a bandwidth of greater than, or equal to, 10 MHz from the first frequency to the last frequency of the band irrespective of the presence of notches. Similarly, the term "narrowband" will be used to refer to a frequency band used by a powerline technology signal, characterised by having a bandwidth of less than 10 MHz.

Finally, the term "*transmission time*" will henceforth be used to describe the maximum amount of time it takes to transmit a single co-existent message. The transmission time includes, but is not limited to, a start of transmission marker time (if any), a synchronisation time (if any), a channel access resolution time (if any), a negotiation time (if any), a message transmission time, an acknowledge transmission time (if any) and an end of transmission marker time (if any).

### (b) Difficulties in Communicating Over Powerlines

As traditional power supply networks were not designed for communication purposes, the technologies (particularly the modulation technologies) used for communicating over powerlines require special strategies to enable data to be transmitted with sufficient reliability. When developing these strategies, it was necessary to consider factors such as:
multiple paths and reflection;
impulse noise;
frequency dependent impulse response; and
narrow band interference.

For example, modulation techniques such as orthogonal frequency division multiplexing (OFDM) and Code Division Multiple Access (CDMA) are widely used in powerline communications to mitigate the effect of interference and narrow band impulse noise. OFDM uses the sum of multiple overlapping but non-interfering, sub-carriers to carry content across a medium. OFDM is typically implemented using a discrete Fourier transform (DFT) (or its more specific fast Fourier transform (FFT)) as the filter bank at the core of the modulation block.

CDMA employs a code, rather than a frequency, as a carrier. The code is a pseudo-random sequence that can be purposely chosen for characteristics like frequency spectrum, orthogonality with other codes, etc. and can be considered as a more general case of a carrier than a single frequency. The codes may be mixed and recovered without losses after synchronisation. A further modulation technique known as Orthogonal Wavelet Division Multiplex (OWDM) was proposed by CEPCA and developed by Matsushita and employs a version of OFDM based on wavelet transforms.

On a related note, since the channel capacity of a powerline and connectors attenuates according to, amongst other features, the frequency of a transmitted signal, current generation PLC systems have been developed to transmit signals at relatively low frequencies (i.e. below 30 MHz) and thereby obtain suitable transmission distances. However, the use of such low transmission frequencies limits the maximum throughput obtainable by such PLC systems.

The processes of receiving analogue signals and injecting modulated signals are treated differently by different PLC standards. Current approaches perform some analogue conditioning to the signal-path (e.g. low-pass filtering for anti-aliasing or smoothing, or AC coupling to remove the low-frequency [<< 1KHz] high voltage content of the electricity mains) but there are no analogue systems available for combining two or more broadband PLC technologies that can work simultaneously.

### (c) Developments in High Speed PLC

### (i) Technical Developments

In its early days, PLC was mainly used for home automation (e.g. remote control of lighting) using very low data transmission rates (i.e. < 1Mbps). However, in recent years several medium data-rate PLC technologies have been developed (including HomePlug 1.0 and other proprietary solutions) that enable data to be transmitted at tens of Megabits per second. The HomePlug 1.0 system is described in United States Patent No. US5574748 and the DS2 proprietary system is described in European Patent Application No. EP1351408.

### (ii) Regulatory Developments

In recent years a number of international standardization bodies, and/or international consortiums, have attempted to standardize broadband PLC systems that transmit data at hundreds of Megabits per second. Accordingly, at present there are three standards proposed by three different groups (namely Homeplug, the Universal Powerline Association (UPA) and the Consumer Electronics Powerline Communication Alliance (CEPCA)). The Open PLC European Research Alliance (OPERA) project is supported by the UPA. In addition, CEPCA, Homeplug and UPA are all proposing their specifications to the IEEE and the ETSI.

Both the HomePlug AV standard and the OPERA standard use the frequency range of 1-30MHz to transmit signals and the developers of these standards have campaigned with regulators to allow signals within this frequency range to be transmitted at elevated power-levels. However, radio waves emitted from signals injected at these frequencies can interfere with licensed radio services (e.g. emergency services). Thus, in order to allow PLC signals to be injected at high power levels, whilst protecting licensed radio services from RF interference, regulators have required PLC operators to ensure that PLC technologies attenuate or "notch" PLC signals in frequency bands where licensed services are in nearby use.

The term "*notch*" will be used henceforth to refer to a frequency band where the energy level of a powerline technology signal has been deliberately reduced to prevent interference with other users of the spectrum (whether on or off the powerline). Notches are characterized by having a narrower bandwidth than the powerline technology signal itself and are generally implemented by digital or analogue signal processing means within a single digital signal processing block or analogue front end.

For the sake of clarity, the term "sub-band" will be used henceforth to refer to a frequency band where a powerline technology signal characteristic differs from the characteristics of the powerline technology signal in the remainder of the signal's bandwidth. Such differences can include the optional or mandatory presence of the sub-band, the signal power level of the sub-band and the directionality of the sub-band. Sub-bands are characterized by having a narrower bandwidth than the powerline technology signal itself. The use of overlapping sub-bands in OFDM enables notches to be created, wherein a sub-band is disabled if the reception of the sub-band is heavily impaired or the sub-band can interfere with another service. Furthermore, OWDM can simplify the notching out of carriers due to its lower side lobes.

On a different note, the above-mentioned new PLC standards permit a node to have only one physical receiver and one transmitter active at any given time. High throughput is achieved in these systems by employing a large number of bits per second per hertz (i.e. bps/Hz) in their modulation schemes. However, this increases the complexity and cost of the digital and analogue implementations of the systems and can also increase their buffering requirements.

The development of technologies in the 1-30MHz range has influenced regulatory bodies such as CISPR to allow signals to be transmitted in this frequency range at increased power levels (e.g. CIS/I7897CD). In the future the regulators may allow a wider frequency range with elevated power-levels, as they re-arrange their licensed spectra and confirm interference issues. Subsequently powerline technology developers may take advantage of the changes or anticipated changes by extending the wideband used by their technologies.

### (d) Co-existence with Earlier PLC Standards

Because different PLC standards have developed independently of each other, the problem of enabling their co-existence at the same frequency bands has become increasingly important. Some work has been done in this area as described in International Patent Application No. WO3013019 and Spanish Patent Application No. ES2221803. The systems described in these documents employ time division and sharing, and are applicable to two or more incompatible networks being allowed to operate on the same cable.

Sharing the frequency spectrum within a communication band is less beneficial and more complex, because of overlaps between each of the current modulation technologies. This has a direct impact on the performance of each PLC standard in the absence of negotiation between user modems. A proposal to allow frequency band changes has been disclosed in International Patent Application No. WO2003015291. However, it should be noted that both the frequency sharing approach (described in WO20030152919) and the above-mentioned time sharing approaches are merely co-existence strategies, rather than communication technologies.

The 45Mbps Mixed Analog-Digital Broadband IC for Internet Power-Line Data Synchronous Link (codename Madbric) has the ability to use different frequency bands for different applications. The different bands are all in the 1-30MHz range, and are used for either reception or transmission, effectively being part of the same communication system, and are not being capable of being operated independently.

### 2. Prior Art Multi-Frequency or Frequency Translation Communication Techniques

Patent No. TW516283 describes an apparatus comprising an analogue front-end that with minimal design change can work in two different frequency bands. However, the apparatus cannot operate in the two different frequency bands simultaneously (i.e. concurrently and reliably on the same powerline at any given instant in time). The purpose of the apparatus is to enable the same modem to be built for different frequency bands by changing a few components in the design. Once configured, the apparatus will only transmit in the configured frequency band (i.e. above or below 25MHz). In other words, once configured, only one frequency band will be available for communication.

United States Patent No. US2004107588 describes an analogue front end for a PLC system that is capable of shifting a total and unique frequency band, using a mixer or a synthesizer (similar to a tuner in a radio) to translate a transmitted or received band from one frequency to another. This provides the ability to transmit and receive signals from any frequency band, but does not allow multiple bands to simultaneously and independently (i.e. without synchronisation of different operating phases such as reception, transmission, negotiation etc.) communicate with different parts of the network.

United States Patent Application No. US2003016123, describes a power control system that injects more power into each of the sub-bands of an OFDM system that are more affected by channel impairments. The resulting signal is transmitted as a single band, but with a particular power shape depending on the sub-band power assignation. Here the power-shaping is performed within the same wideband signal, transmitting different power levels for each sub band. These sub-bands are part of the same communication system. As such, there is no independent and simultaneous operation. Consequently, there is no need to implement analogue separation of each of the sub-bands into different receiver or transmitter paths.

United States Patent No. US5777544 describes a method of combining a narrowband control signal with a wideband data signal. However the signals are not operated independently and are in fact synchronised. More particularly, one signal is purposefully a narrowband signal for control, the other signal is wideband in nature and used for general communication.

International Patent Application No. WO2004100392 describes a way of performing OFDM powerline modulation using a signal split into sub-bands with each sub-band being modulated with the same unique and common modulation system. The sub-bands will have in principle the same power level, with a maximum width below 10 MHz. Furthermore, all the bands have a frequency below 30 MHz, and relate to the same powerline technology. The process of splitting the frequency bands is performed in the digital domain, and in terms of communication theory, should be considered as part of the overall digital signal modulation. The sub-bands are synchronised and are therefore not independent.

Some patents have been disclosed regarding the joint use of different communication technologies in general as gateways or bridges between power line and other communication technologies. Among others, United States Patent No. US6243413 and United States Patent Application No. US2005089061 describe a modem that performs Ultra-Wide-Band and PLC. Similarly, International Patent Application No. WO2003049416 describes a modem that combines PLC and optical fibre, and European Patent Application No. EP1370029 describes a modem that combines Bluetooth and PLC. In these patent documents, different technologies are sometimes simultaneously transmitted but in these cases, the different technologies are transmitted through different transmission media. Furthermore, the systems described in these prior art documents typically comprise one transmitter and receiver for each of the involved technologies.

EP 1 432 138 describes a digital data distribution system comprising an electric power lines network and inductive couplers distributed in different locations of the network for coupling data processing units to this network for transmission, and in these couplers, a master coupler and a set of slave couplers, wherein the master coupler comprises a coding emitter, of the CDMA type, with a spreading factor, for transmitting CDMA coded data on the network after such a coding, and each slave coupler comprises a receiver, for receiving this CDMA coded data from the master coupler and for decoding it, and a QAM modulation emitter, without spreading factor, for transmitting coded data on the network to said master coupler.

### 3. Problems with Prior Art PLC Systems

In common with most communication systems, one of the main problems with prior art PLC systems is obtaining high throughput and wide coverage at reasonable implementation cost, whilst maintaining compatibility with existing technologies. Although a few PLC systems are currently on the market, which provide transmission rates of hundreds of megabits per second, they have high implementation costs as they employ high bps/Hz modulation schemes (i.e. approximately 10 bps/Hz) which require high accuracy data converters, extremely linear interface electronics and increase the cost of the digital implementation due to the computational complexity of the modulation.

Whilst the demand (especially in the home media market) for increased throughput is constantly growing, prior art PLC systems have limited options for expansion. EMC regulations have imposed certain restrictions on the use of powerline as a communication medium but allow for significantly more injected power in the 1MHz to 30MHz range than in higher bandwidths. Accordingly, current generation PLC systems employ the 1MHz to 30MHz band, often with a modulation technology that includes sub-bands or notches (to avoid interference with other licensed radio communication systems).

Consequently, the throughput of such existing systems is limited by construction because of:
(a) the selected band; and
(b) the feasible bps/Hz that can be practically implemented with a state of the art modulation scheme, and its associated digital front-end and analogue front-end instantiations. This means that the current PLC systems have no realistic route to deliver a throughput in the Gbit/s range.

The challenge of enabling coexistence between different generations of a PLC technology (and/or between competing technologies that use the same frequency band) increases the cost and complexity of digital modulation. The main techniques developed to handle this problem also lead to inefficient channel usage and are aimed at allowing multiple independent networks to be present on the same cable, rather than meshing them into a single integrated communication system.

Current broadband technologies have been designed with a single analogue front-end that attempts to match the requirements of a modulation scheme (to push as much data through the channel presented by the cabling), with the maximum power that is allowable by the regulations over the entire working bandwidth. This challenges the analogue implementation to obtain an efficient solution even for a current generation powerline system. The noise floor, dynamic range and linearity requirements of the analogue interface technology become particularly difficult if there is a requirement to increase throughput by increasing the bps/Hz in a power-spectrum restricted system such as the currently regulated powerline frequencies.

Increasing the bps/Hz of a modulation scheme necessitates a linear increase in the number of bits used in its converters and digital signal processing. However the digital implementation cost of such systems increases non-linearly because of the higher precision of their computational requirements (since the majority of signal processing functions are multiplications whose cost increases by the square of the required number of bits).

The analogue implementation cost also increase non-linearly with bps/Hz. For example, an N bit converter is not simply twice the size of a N/2 bit converter, as there must either be a binary increase in the number of elements, or the elements must be made larger to achieve the matching performance expected of the higher quality converter.

The bps/Hz requirement increases the linearity specifications of the interface circuitry so that the signal to noise and distortion (SINAD) ratio of the increased bps/Hz modulation scheme is achieved. However, with the ever-decreasing supply voltages required by the shrinking silicon technologies used in cost-effective integrated circuitry, the increased linearity specification increases the design complexity of the interface circuitry and reduces its feasibility.

Similarly, simply increasing the bandwidth of a single wideband communication technology significantly beyond 30MHz to get greater throughput without any regulatory change, would either require a compromise on the injected power over the whole band, or would significantly challenge the dynamic range of the transmitter and receiver electronics. Accordingly, there is no simple way to use a higher frequency band with a single analogue front-end without increasing its implementation costs, degrading coverage or risking major compatibility issues.

In addition, simply increasing throughput without having the flexibility to alter the maximum transmission times imposed by requirements to enable co-existence with existing PLC technologies (within the band below 30MHz), would increase buffering requirements.

Prior art PLC systems only allow single technology broadband communication and employ a single analogue front-end that must cope with the entire dynamic range of a transmitted signal, even if in certain cases, the signal can be split into different frequency sub-bands by PLC modulation techniques, (e.g. creating notches with OFDM by disabling some of the carrier frequencies, or in the sub-band approach described in International Patent Application No. WO2004100392).

None of the prior-art solutions allow the possibility of a single integrated communication network which enables two or more wideband, general use, simultaneous and independent bi-directional broadband data communication technologies to work in the same powerline medium, to achieve a better cost/performance trade-off and expandability to Gbit/s performance levels.

According to the invention, there are provided a device for communicating over a powerline as defined by independent claim 1 and a method of communicating over a powerline as defined by independent claim 6.

Further advantageous features of the invention are defined by the dependent claims.

The powerline communication device improves the throughput/coverage/cost performance trade-off of a powerline network when compared with current-generation PLC networks, by spreading the transmission of data into a plurality of independent wideband frequency bands that can be operated simultaneously and independently.

Furthermore, the powerline communication device also facilitates inter-operability by using one of the frequency bands to facilitate communication with nodes employing previous powerline technologies. In this way, the powerline communication device provides a way of creating a scalable implementation of a heterogeneous network where nodes of previous technologies work, without loss of performance, together with new-generation powerline technologies.

More particularly, the powerline communication device enables the use of frequencies above 30 MHz whilst maintaining compatibility with current worldwide EMC regulations and standards. This is achieved by using a signal of frequency less than 30 MHz (as currently used by the powerline standard and/or regulations) and at least one other signal of frequency greater than 30 MHz without compromising the performance of any of the signals due to interference.

The result is a new PLC system that facilitates interoperability with a pre-existing powerline communication technology within a wideband (currently in the frequency range of 1MHz to 30MHz) and provides the ability to extend the system into new significantly higher frequency widebands (at frequencies between 30MHz and 1GHz) to improve the overall throughput of the resulting communication system while simplifying the implementation of any single given wideband.

The powerline communication device comprises a network interface device that employs an analogue signal processing means to separate the paths of different wideband signals received from the powerline before converting them to their digital representation. The analogue signal processing means also separates the paths of different wideband signals to be transmitted on the powerline (after their conversion from their digital representation). The network interface device employs TDMA (time division multiple access) and/or FDMA (frequency division multiple access) as a scheme for enabling co-existence, synchronisation and/or bi-directional transmission.

The analogue signal processing means is a purposefully designed block comprising discrete and/or integrated electronic components and the natural characteristics of the wiring and/or printed circuit board traces used to interconnect said components.

Although the powerline communication device increases the number of components and signal paths in the network interface device, the powerline communication device provides greater potential for optimising and reducing the cost/complexity of each of the components and signal paths. This is particularly the case, when the powerline communication device is employed in a system that must:
(a) be expandable to provide greater overall bandwidth, but with widely differing injected power levels in the different frequency ranges; and
(b) coexist and inter-operate with other pre-existing technologies on the same network.

Each of the pre-existing and new-generation powerline technologies may implement different modulation schemes (e.g. OFDM, CDMA and/or OWDM), either alone or in combination). Depending on its channel state, the powerline communication device can send data through any or all of the bands. Furthermore, depending on its network function, the powerline communication device can distribute the data from a single source or mesh it together with data repeated from another node on the network.

Each node on the powerline communication network is an apparatus that integrates:
(a) the analogue signal processing means and modem converters (e.g. DFE, MAC etc.) as part of the powerline network interface device; and
(b) an application such as a computer, mass storage device, display device, speaker, DVD player, PVR, etc.; and/or
(c) an interface to connect an application such as a Digital audio interface, Digital video interface, Analogue audio interface, Analogue video interface, Ethernet interface,
IEEE1394/Firewire/iLink interface or a USB interface.

### Advantages of the Invention

The powerline communication device uses a signal (in line with the current standards and injected power regulations) of frequency less than about 30 MHz and at least one other signal of frequency greater than 30 MHz without compromising the performance of any of the signals due to interference. This feature enables the powerline communication device to increase throughput whilst enabling interoperability with previous PLC technologies.

For the sake of clarity, in terms of explanation of operation of the powerline communication device around current powerline technologies, a wideband frequency band used in the powerline communication device whose frequency of less than about 30 MHz, will be known henceforth as a "low band".
Similarly, a wideband frequency band(s) used in the powerline communication device whose frequency is greater than about 30 MHz will be known henceforth as "high band(s)".

The main advantage of using a low band is the possibility for higher coverage than that achievable with a high band, due to the greater injected power allowed by the regulations and the lower channel attenuation. The main advantage of using a high band is the higher throughput achievable due to the greater available bandwidth.

The powerline communication device can exploit the natural topology of powerline networks in a home, wherein a group of related devices and sockets are typically clustered close to each other (e.g. plasma screen, DVD player and speakers in a living room) and other clusters of devices and sockets are clustered elsewhere (e.g. desktop printer, scanner and ADSL router in a home office). Such household topologies can benefit from the high throughput short-range coverage provided by the high band (which is simultaneously and independently available within each of the clusters) whilst the low band can be used to carry the majority of data communications between the clusters. It will also be appreciated that some nodes may benefit from communications on both bands.

The parallel use of multiple widebands enables the use of different injected power levels, receiver sensitivities, transmission times, symbol lengths and modulation techniques to optimise the performance and cost of each wideband, leading to a better cost performance solution even though it is necessary to provide more than one analogue and digital front-end. Part of the implementation cost advantage arises from the ability to reduce the bps/Hz in each wideband, but still maintain throughput performance because of the additional bandwidth available. This effect non-linearly compensates for the cost of implementing more than one wideband communication technology. Furthermore, the reduced coverage of the high band(s) is offset by the parallel use of the low band (with its greater allowable injected power).

For instance, the powerline communication device may be used to provide Gbit/s performance at a lower cost than current 200Mbps systems, by using lower bps/Hz modulation schemes (i.e. approximately 5 bps/Hz rather than 10 bps/Hz) over multiple widebands.

In order to practically implement the powerline communication device, a network interface device must employ analogue separation and include multiple analogue front-ends. The use of analogue frequency separation enables each wideband technology to operate independently, and has the following main advantages:
(a) it allows independent performance optimisation of the analogue to digital converters (ADCs), digital to analogue converters (DACs) and PGA or line drivers employed in processing the signals from a given frequency band, wherein the optimisation is performed for the required bandwidth, linearity and dynamic features of the frequency band and optimised for the power levels required to match EMC regulations and/or coverage of the frequency band;
(b) it allows the powerline communication device to maintain compatibility and inter-operability with existing standards using one of the frequency bands, whilst exploiting independently (and without causing prohibitive interference to) another frequency band for additional communication (for example, the Homeplug AV standard which uses frequencies in the range of 2MHz-28MHz could work simultaneously with another standard that uses frequencies substantially greater than 30MHz);
(c) it dramatically increases the capacity of the powerline communication device by allowing the inclusion of additional widebands that do not need to use the same modulation technology, but can use modulation technologies that best match the new frequency bands' powerline channel characteristics; and
(d) it enables different widebands to operate without synchronisation to other widebands.

The powerline communication device can also allow other network technologies to be layered independently on top of it, for example:
(a) combinations of data from different bands at various different communication levels whether in the digital front-end, the MAC layer or the application layer;
(b) using notches in the modulation scheme to limit emissions of certain frequencies within one of the analogue defined wideband frequencies;
(c) using repeaters in a node to re-transmit on the same or a different frequency band;
(d) using a range of modulation schemes such as OFDM, CDMA and/or ODWM; and
(e) forming point-to-point, point-to-multipoint and or multipoint-to-multipoint communication patterns.

Furthermore, the network interface device can combine and partition data communicated across different paths to maximise performance, coexistence and interoperability whilst minimizing system cost.

### Brief Description of the Drawings

Multiple embodiments of the invention will now be described by way of example only with reference to the accompanying Figures in which:
Figure 2a is a block diagram of an exemplary heterogeneous network comprising a plurality of nodes, some of which have multiple wide-band capabilities;
Figure 2b is a block diagram of the exemplary heterogeneous network of Figure 2a, depicting two simultaneous, bi-directional communication links therein;
Figure 2c is a block diagram of the exemplary heterogeneous network of Figure 2a, depicting three simultaneous communication links therein;
Figure 2d is a block diagram of a first stage of a one packet data transmission procedure implemented on the heterogeneous network of Figure 2a;
Figure 2e is a block diagram of a second stage of the one packet data transmission procedure shown in Figure 2d;
Figure 3 is a block diagram of the hardware architecture of a modem in a powerline communication device in accordance with the invention;
Figure 4a is a block diagram of signal paths in a single coupling unit prior art powerline transmission system;
Figure 4b is a block diagram of signal paths in a dual coupling unit prior art powerline transmission system;
Figure 4c is a block diagram of signal paths in a first embodiment of the powerline communication device;
Figure 4d is a block diagram of signal paths in a second embodiment of the powerline communication device;
Figure 4e is a block diagram of signal paths in a third embodiment of the powerline communication device;
Figure 4f is a block diagram of signal paths in a fourth embodiment of the powerline communication device;
Figure 5a is a block diagram of a first integrated circuit embodiment of the powerline communication device;
Figure 5b is a block diagram of an alternatively partitioned second integrated circuit embodiment of the powerline communication device;
Figure 5c is a block diagram of a further alternatively partitioned third integrated circuit embodiment of the powerline communication device;
Figure 6a is a circuit diagram of an exemplary capacitive coupling unit used in the powerline communication device;
Figure 6b is a circuit diagram of an exemplary inductive coupling unit used in the powerline communication device;
Figure 7a is an exemplary power transmission spectrum of three powerline technologies;
Figure 7b depicts the frequency characteristics of an exemplary set of analogue filters for use in separating the widebands used by the three powerline technologies depicted in Figure 7a;
Figure 7c shows the signal isolation provided by a second analogue filter Filt_{B} (shown in Figure 7b) to the Tech_{B} signal (shown in Figure 7a);
Figure 8a is a block diagram of a household with a simple initial installation of the powerline communication network of the third aspect of the invention; and
Figure 8b is a block diagram of a household with a more complex installation of the powerline communication network.

### Detailed Description of the Preferred Embodiment

### 1. Introduction

For the sake of clarity, the powerline communication device of the present invention will be referred to henceforth as an "improved powerline communication device". Similarly, the network interface device of the improved powerline communication device will be referred to henceforth as an "improved network interface device". Finally, the powerline communication network comprising nodes that are improved communication devices will be known henceforth as an "improved powerline communication network".

The following description will provide a broad overview of the improved powerline communication device. The next section will use an exemplary heterogeneous powerline network to discuss different communication link configurations supported by the improved powerline communication network. The operation of the improved powerline communication device will next be described by referring to a one-packet communication mechanism (using the repeator principle) implemented on the previously-described exemplary heterogeneous powerline network. It will be appreciated that the specific heterogeneous network described in these sections is used for illustrative purposes only. In particular, the examples described in these sections should in no way be construed as limiting the improved powerline communication device.

Having discussed how the improved powerline communication device works, the next section will describe the hardware architecture of a modem in a improved network interface device. To demonstrate the advantages and possible configurations of the improved powerline communication device, the next section will compare the paths in prior art network interface devices and the improved network interface device.

The description will finish with brief discussion of the use of the analogue separating means to isolate different widebands; and an example of how the improved powerline communication network might be used in a household context.

### 2. Broad Overview

The preferred embodiment of the improved powerline communication network comprises a plurality of nodes of which some employ a network interface device that enables simultaneous and independent communication over two or more widebands, to similar multi-wideband nodes. The first wideband comprises frequencies of less than 30MHz, in line with the current standards and injected power levels (and will henceforth be known as a low band) and the other wideband(s) comprise frequencies of greater than 30MHz (and will henceforth be known as high band(s)). This enables powerline technologies to be optimised for each of the widebands, so that the trade-off between cost, coverage and throughput will be superior to that achieved by a purely mono-wideband approach.

In particular, the modulation schemes for each technology used within the improved powerline communication network can be optimised for cost.
For instance it may not be necessary to use a particularly high modulation density (bps/Hz) in the low band to enhance throughput because the low band can work in parallel with the inherently high throughput high band(s).

The improved powerline communication network provides inter-operability with prior art powerline technologies by also supporting communication with mono-wideband nodes (that use one of the powerline technologies supported in the low band or high band(s) and communicate at frequencies in the low or high band(s).

The improved network interface device may be part of an external modem apparatus or embedded within another apparatus (e.g. computer, TV etc.).
However, regardless of the manner in which an improved network interface device is included within a node, the device remains physically connected to electrically conductive cabling (that passes AC or DC power) and is capable of transmitting digital data across the cabling using either or all of the low and high bands.

In accordance with current regulatory standards, low band signals may be transmitted with a power of approximately up to -50dBm/Hz whereas high band signals may only be transmitted with a power that causes emissions in this frequency band to be lower than -80dBm/Hz. Accordingly, signals in the low band may be transmitted with a power approximately one thousand times greater than signals in the high band. Consequently, if signals in both of these bands were to be transmitted simultaneously, without using some form of analogue frequency isolation, the dynamic range and voltage compliancy requirements of the high band signals would be significantly increased.

However, the potential for interference or saturation of a lower power signal may be even more problematic. In particular, if one of the bands is used to receive a line-attenuated signal whose power level is close to the noise on the powerline (i.e. - 150dBm), while at the same time, the other band is used to transmit a signal at its maximum allowable transmission power, the isolation required to prevent the signals from the two bands from interfering with each other would be approximately 100dB. However, this is beyond the current state of the art analogue implementations and would have high implementation costs.

In summary the isolation required to effectively allow simultaneous and independent communication of high and low bands falls into three main categories:
(1) isolation to prevent the strength of a signal received over the network in one wideband from saturating the receiver of the other wideband;
(2) isolation to prevent the transmitter of one band from interfering with the reception of another band;
(3) isolation to prevent the degradation of the transmitter for one band when another band is being transmitted.

In view of the above, the improved network interface device employs an analogue separation means to isolate the paths from the powerline connection to an apparatus; to data-converters for each wideband. One of the most efficient ways of providing this isolation is by high-pass filtering or band-pass filtering high band signals, whilst minimising out-of band signals in the low band (using high linearity components and possibly analogue low-pass smoothing or anti-aliasing). Whilst other analogue techniques (e.g. echo-cancelling or resistive diplexers) might be capable of providing the required isolation, these other techniques would be difficult to implement in the frequency ranges of the improved powerline communication network.

For the sake of simplicity, the term "*transmitter signal path*" will be used to refer to the path of a signal transmitted from an apparatus to the powerline. Similarly, the term "*receiver signal path*" will be used to refer to the path of a signal received by an apparatus from a powerline. On a related note, it may not be necessary to perform the isolation on both the receiver and transmitter signal paths (depending on the specifications of the analogue components and the modulation techniques employed therein).

Signals in the high band and the low band can use the same or different modulation techniques (e.g. OFDM, CDMA and/or ODWM) or time division schemes to facilitate co-existence and/or bi-directional communication. In one possible scenario, the low band could employ a modulation scheme that is inter-operable with one of the existing powerline modem standards or proposals, whilst the high band is used for performance expansion. Data and/or control can be passed through one or both of the widebands simultaneously and via a plurality of nodes in the form of a repeater network.

There are many different ways of implementing the improved powerline communication device. For example, the improved powerline communication device may be implemented on one or more integrated circuits (whether dedicated to the modem function or as part of an application system on a chip), and in combination with the characteristics of passive components and interconnects. However, the implementation of the analogue filtering means to separate the low band and high band(s)) employs a combination of all the components in the different signal paths, whether passive or active, integrated or discrete. In particular, it is possible for the widebands:
(a) to share part of their paths (e.g. through a coupling unit); or
(b) to be joined only at the powerline; or
(c) to be at opposite ends of the apparatus.

It is also possible to expand the improved powerline communication device to communicate on more than two widebands. Similarly, it is also possible for the widebands to overlap slightly if required, and to be different in frequency ranges to those cited in the specific description.

### 3. Communication Links Supported by the Powerline Communication Network

### (a) Exemplary Heterogeneous Network Implementing the Improved Powerline Communication Network

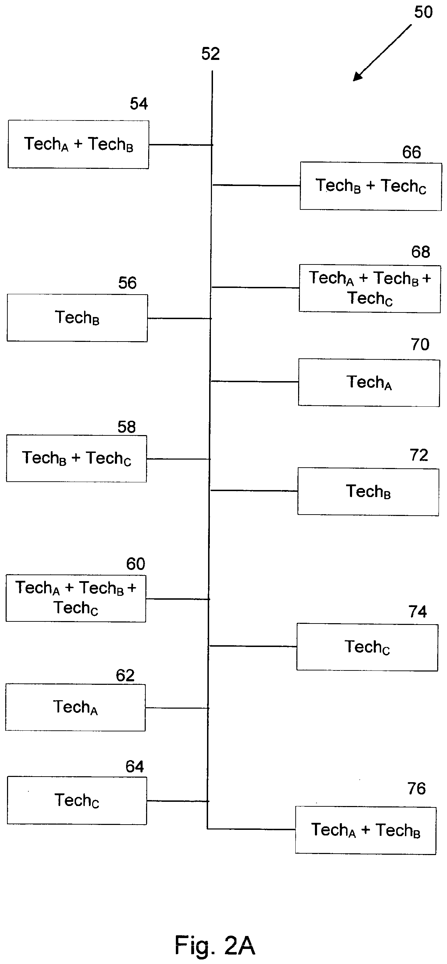

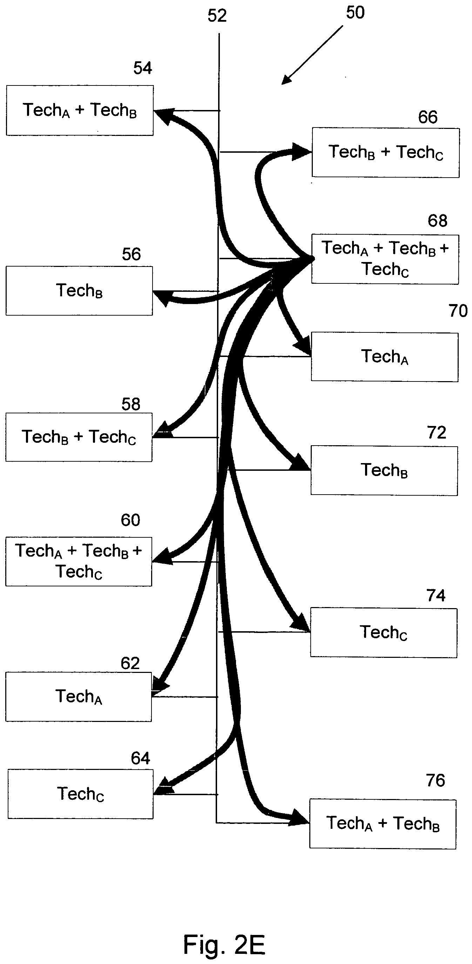

Referring to Figure 2a, a heterogeneous network 50 that represents the improved powerline communication network, comprises a plurality of nodes 54-76. Some of the nodes comprise the improved powerline communication device and accordingly implement more than one PLC technology. Nodes that do not include the improved network interface device can only implement one PLC technology. For the sake of simplicity, nodes that can only implement one PLC technology will be known henceforth as "*mono-wideband nodes*". Similarly, nodes that can implement more than one technology will be known henceforth as "*multi-wideband nodes*".

Three different PLC technologies are employed for communication on the network, namely Tech_{A}, Tech_{B} and Tech_{C}. Nodes 54 and 76 comprise the improved network interface device and are capable of implementing PLC technologies Tech_{A} and Tech_{B}. Nodes 58 and 66 comprise the improved network interface device and are capable of implementing PLC technologies Tech_{B} and Tech_{C}. Finally, nodes 60 and 68 comprise the improved network interface device and are capable of implementing all three PLC technologies.

The remaining nodes (namely nodes 56, 62, 64, 72 and 74) do not comprise the improved network interface device and thus can only implement one of the PLC technologies. In particular, nodes 62 and 70 implement PLC technology Tech_{A} only, nodes 56 and 72 implement PLC technology Tech_{B} only, and nodes 64 and 74 implement PLC technology Tech_{C} only. All of the communication between the nodes on the network 50 takes place through a common powerline 52.

One of the main advantages of the improved powerline communication network is that it supports communication between nodes that implement different PLC technologies. In contrast, prior art PLC systems can only support communication between nodes that implement identical PLC technologies (e.g. nodes 56 and 72), even if the nodes in question co-exist on a network with nodes that implement other PLC technologies (e.g. nodes 64 and 74).

### (b) Possible Communication Links Supported by the Improved Powerline Communication Network

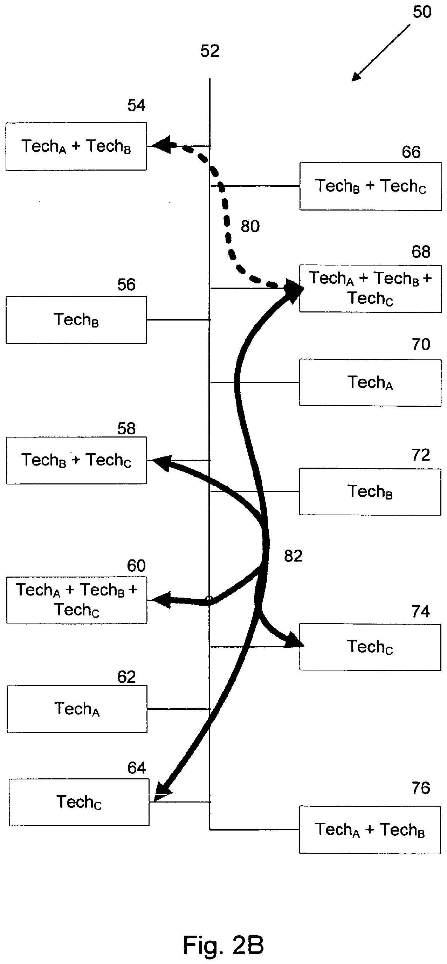

Figure 2b shows two simultaneous, bi-directional and non-interfering communication links in the heterogeneous network 50 of Figure 2a. A first communication link 80 is a point-to-point communication link between nodes 54 and 68 which simultaneously uses the high band and low band to enable simultaneous communication of Tech_{A} and Tech_{B} messages between the two nodes.

It should be noted that whilst node 68 is capable of implementing all three technologies (i.e. Tech_{A}, Tech_{B} and Tech_{C}) only the Tech_{A} and Tech_{B} capabilities of node 68 are used in the first communication link 80. Furthermore, it should be noted that the first communication link 80 can redistribute data from the Tech_{A} and Tech_{B} technologies across the high band and the low band in accordance with the current network characteristics (e.g. channel impairments).

A second communication link 82 connects nodes 68, 58, 60, 74 and 64. Since nodes 64 and 74 are only capable of implementing PLC technology Tech_{C}, the second communication link 82 only supports communications of the Tech_{C} technology.
The presence of the two communication links 80 and 82 allows nodes 68, 58, 60, 74 and 64 to establish communication (through the second communication link 82) at the same time that node 68 is communicating with 56 (through the first communication link 80). In other words, the network arrangement depicted in Figure 2b, enables two simultaneous and concurrent communications to be performed, wherein the first communication link 80 enables dynamic data transmission and reception using technologies Tech_{A} and/or Tech_{B} and the second communication link 82 enables dynamic data transmission and reception using technology Tech_{C}.

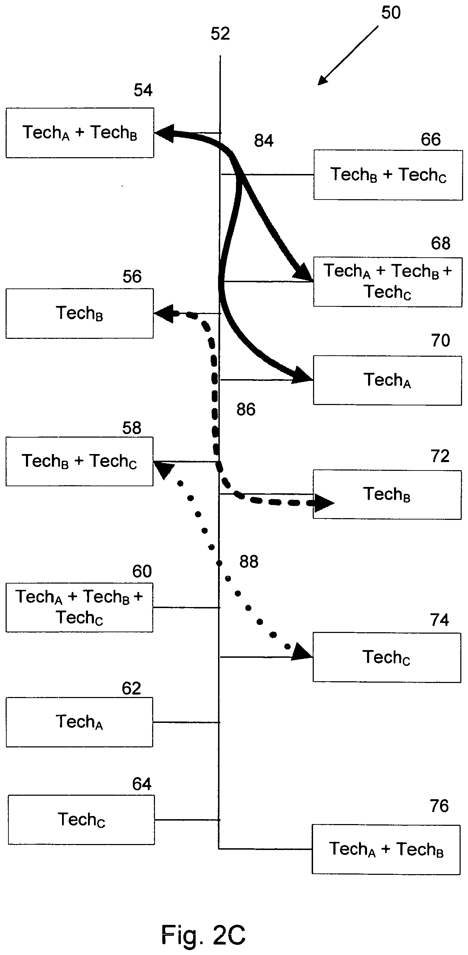

Figure 2c shows three concurrent and simultaneous communication links 84, 86 and 88 in the heterogeneous network 50 of Figure 2a. The first communication link 84 provides a bi-directional point-to-multipoint connection between node 54 and nodes 68 and 70. Since node 70 is only capable of implementing technology Tech_{A}, the first communication link only supports communications of the Tech_{A} technology. Meanwhile a second communication link 86 enables communication between nodes 56 and 72 of technology Tech_{B} with technology Tech_{A}, using a co-existence strategy such as Time Division Multiple Access (TDMA) (i.e. a multiple access technique where only one transmitter transmits on a particular channel at any given time).

Finally, a third communication link 88 supports communication of Tech_{C}, wherein these communications are conducted in a different wideband that does not interfere with the other communication links.

### (c) One-Packet Communication Mechanism Implemented by the Powerline Communication Network

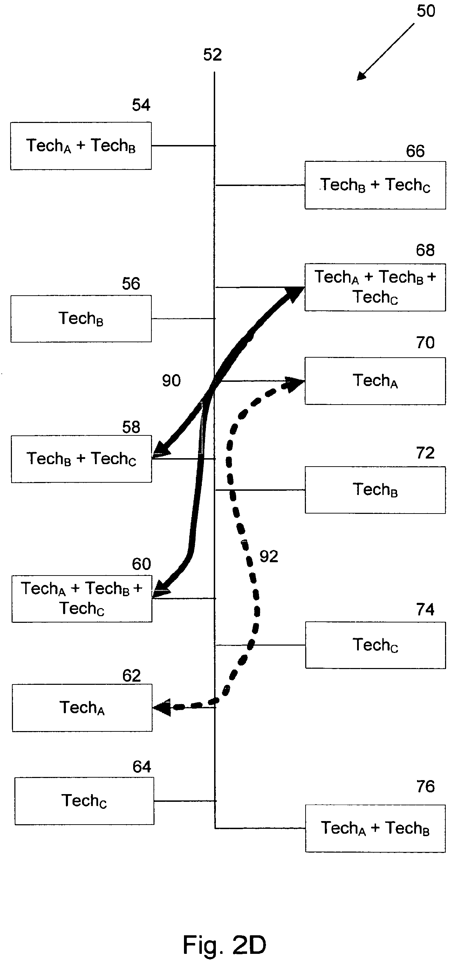

Referring to Figure 2d, let there be a first communication link 90 between nodes 68, 58 and 60 of the heterogeneous network 50 depicted in Figure 2a. The first communication link 50 is bi-directional and supports communication of Tech_{B} and Tech_{C}. Furthermore, let there be a simultaneous second communication link 92 between nodes 70 and 62 of the same heterogeneous network 50. The second communication link 92 supports communication of Tech_{A}.

For the sake of example, let there be a message originating in node 58 that must be distributed to all of the nodes of the heterogeneous network 50. Nodes such as 68, 60 and 66 that support Tech_{B} and Tech_{C}, can demodulate and receive a message from node 58. However, the remaining nodes on the network 50 cannot receive the message. To solve this problem, a two-stage communication process is implemented in which:
(i) in the first stage, the message is transmitted from node 58 to 68, using PLC technologies Tech_{B} and Tech_{C}; and
(ii) in the second stage, the message is retransmitted by node 68, using all of its technology capabilities, so that all of the nodes on the network 50 can receive and demodulate the message.

Repeators can also be used to increase the coverage of a given technology (when a node can detect its neighbouring node, but not further nodes thereafter).

### 4. Hardware Architecture of a Modem in a Network Interface Device of the Powerline Communication Device

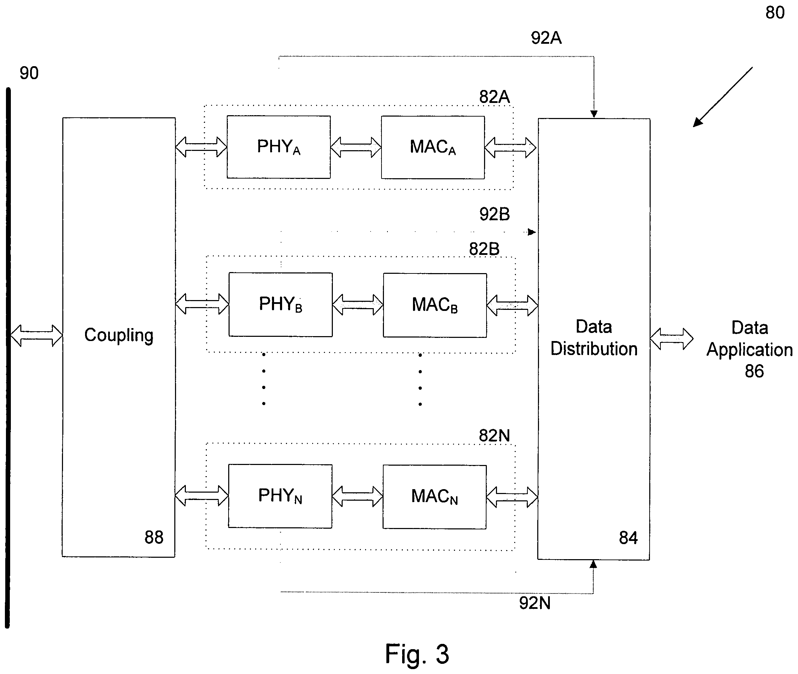

Referring to Figure 3, a modem 80 in an improved network interface device comprises N blocks 82A-82N corresponding to each of the PLC technologies supported by the node. In other words, block 82A corresponds with the Tech_{A} technology, block 82B corresponds with the Tech_{B} technology, and so on, until block 82N, which corresponds with the Tech_{N} technology.

Each block 82A-82N comprises the first (PHY) and second (MAC) layers of the OSI stack for each technology. For example, the block 82A comprises the blocks PHY_{A} and MAC_{A}. Similarly, the block 82B comprises the blocks PHY_{B} and MAC_{B}. The modem 80 further comprises a data distribution block 84, which distributes data amongst the blocks 80A and 80N in accordance with the technology of the signal and current network traffic characteristics.
When used for transmission, signals from each technology supported by a node are processed by an analogue filter bank (not shown). The operation of the analogue filter bank will be described in more detail later. The processed signals 86 are forwarded to the data distribution block 84 for distribution amongst the blocks 82A-82N. The outputs from all of the blocks 82A-82N are combined in a coupling/decoupling stage 88 from which they are injected into a powerline 90.

When used for receiving a signal from the powerline 90, the coupling/decoupling stage 88 decouples the component signals for each supported PLC technology. The decoupled signals are processed through blocks 82A-82N and forwarded through the data distribution block 84 to the appropriate applications running on the node.

Each of the PHY blocks (PHY_{A}-PHY_{N}) may have a feedback signal 92A-92N which provides information regarding the usage of each of the technology signal paths. This information is used by the data distribution block 84 to redistribute the data flow amongst the N available blocks 82A-82N. It should also be noted that parts of the MAC and PHY blocks (PHY_{A}-PHY_{N}) and (MAC_{A}-MAC_{N}) may be capable of sharing resources.

### 5. Signal Paths in the Improved Powerline Communication Network

### (i) Signal Paths in Prior Art Powerline Transmission Systems

### 1. Single Coupling Unit Prior Art Powerline Transmission System

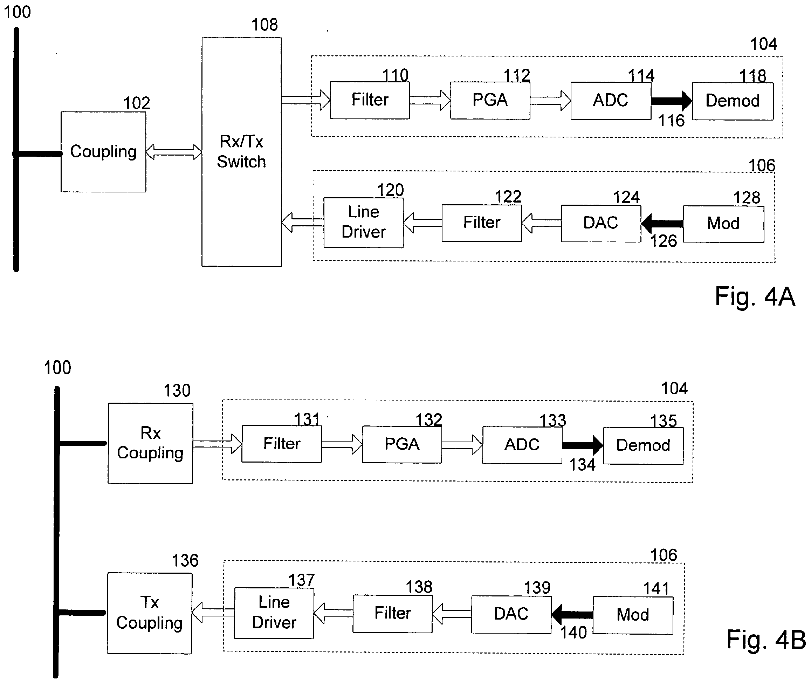

Referring to Figure 4a, in a first form of a prior art powerline transmission system, a powerline 100 is connected to a single coupling unit 102, which has high-pass transmission characteristics to enable the rejection of the AC line frequency of the powerline 100. The coupling unit 102 is in turn connected to receiver and transmitter paths 104, 106, which are isolated during half duplex phases using an RX/TX switch 108.

The receiver path 104 typically comprises a band-limiting anti-aliasing filter 110, a programmable gain amplifier (PGA) 112, and an ADC 114. The resulting digital signal 116 is then demodulated 118. The anti-aliasing filter 110 may be in a different order and may be partially or completely provided by the bandwidth of the PGA.

The transmitter path 106 typically comprises a line driver 120 (which may or may not be capable of operating in high impedance mode) and a band-limiting smoothing filter 122. The band-limiting smoothing filter 122 limits the power of harmonics (in the out-of-band range) in the analogue signal (the harmonics being produced by the operation of a DAC 124 on a received digital signal 126 that had previously been modulated 128). It will be realised that part of the modulation and demodulation schemes 118, 128 could also be performed in the analogue domain.

### 2. Dual Coupling Unit Prior Art Powerline Transmission System

Referring to Figure 4b a slightly different form of a prior art single wideband system employs separate transmitter and receiver coupling units 130, 132. A TX/RX switch is not required in this form of the prior art powerline transmission system, as either the impedance of the line driver 120 does not significantly represent an extra impedance load to the powerline 100 or the line driver 120 itself is capable of going into a high impedance mode.

### (ii) Signal Paths in the Improved Network Interface Device

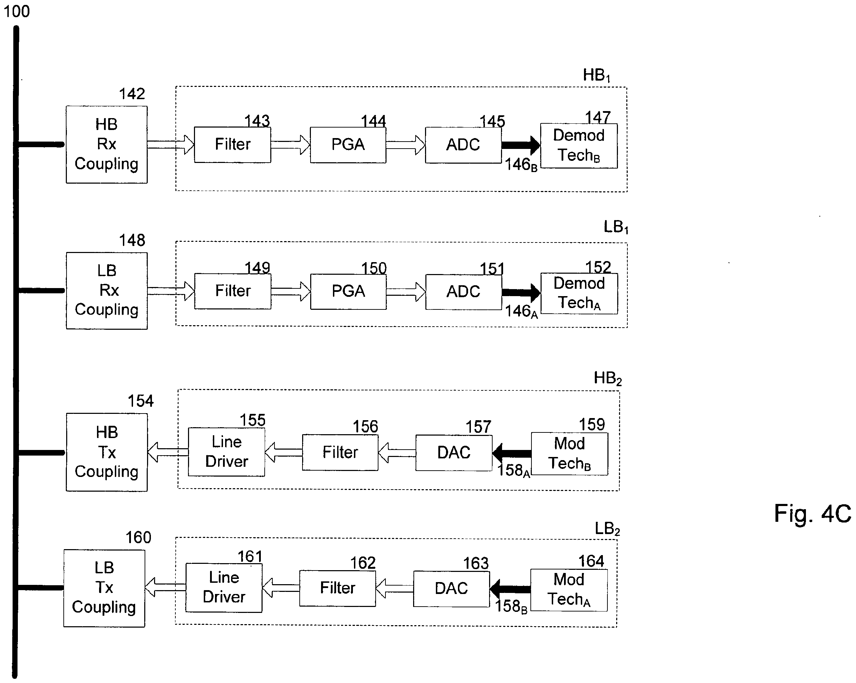

Referring to Figure 4c, the improved network interface device comprises two analogue front-ends separated into two low band analogue paths LB₁ and LB₂ and two high band paths HB₁ and HB₂, by coupling units 140, 142, 144 and 146 respectively.

The analogue filtering characteristics of the different paths (including the coupling units 140-146 and the active components) are designed to pass the signal of a given band whilst rejecting the signals of the other bands. The modulation schemes of each technology 152, 154 may be the same or different, as may be the demodulation schemes 148, 150.

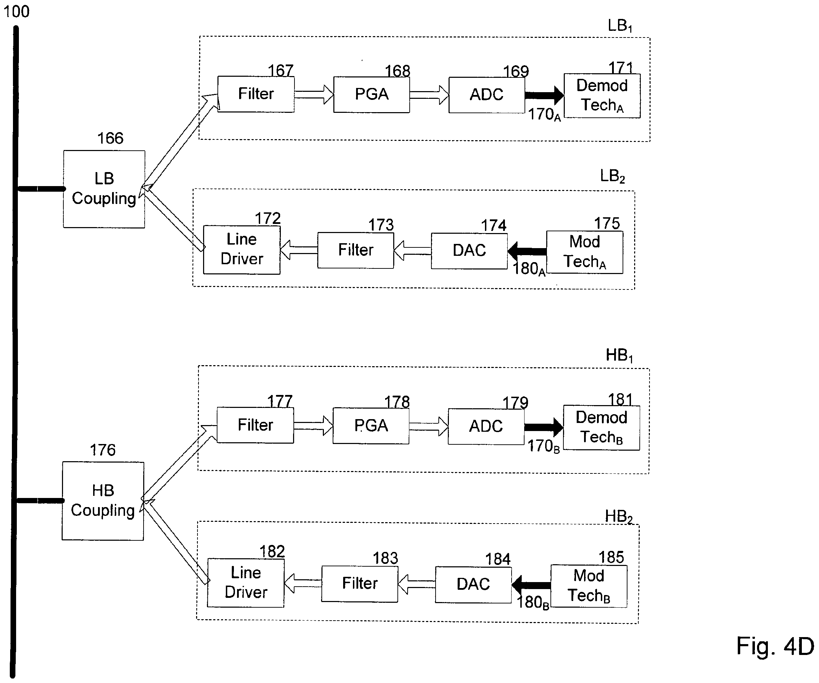

Referring to Figure 4d in a second embodiment of the improved network interface device there are two coupling units 166, 176, wherein coupling unit 166 is used for low band communication and coupling unit 176 is used for high band communication. In addition to the optimisation of the low band paths (167-171 and 172-175) and the high band paths (177-181 and 182-185) for the power, frequency and modulation schemes of different PLC technologies, the coupling units 166, 176 can be optimised to have different pass-frequency characteristics.

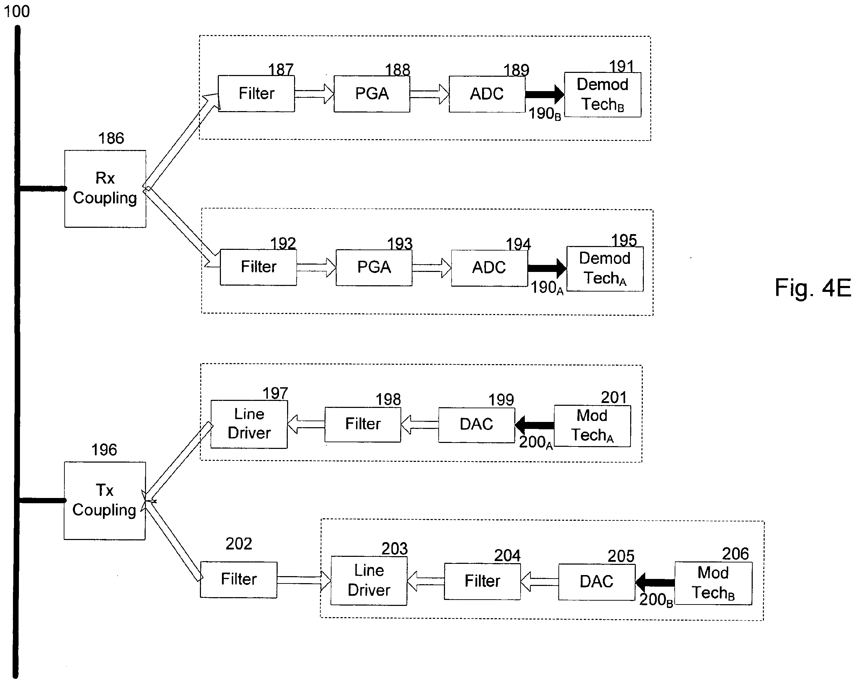

Referring to Figure 4e, in a third embodiment of the improved network interface device, there are two coupling units 186 and 190, wherein coupling unit 186 is used for reception and coupling unit 190 is used for transmission. However, each high band path (188-191 and 203-206) is isolated from the low band paths (192-195 and 197-201) by deliberately inserted filters 187, 202 with high pass or band pass characteristics.

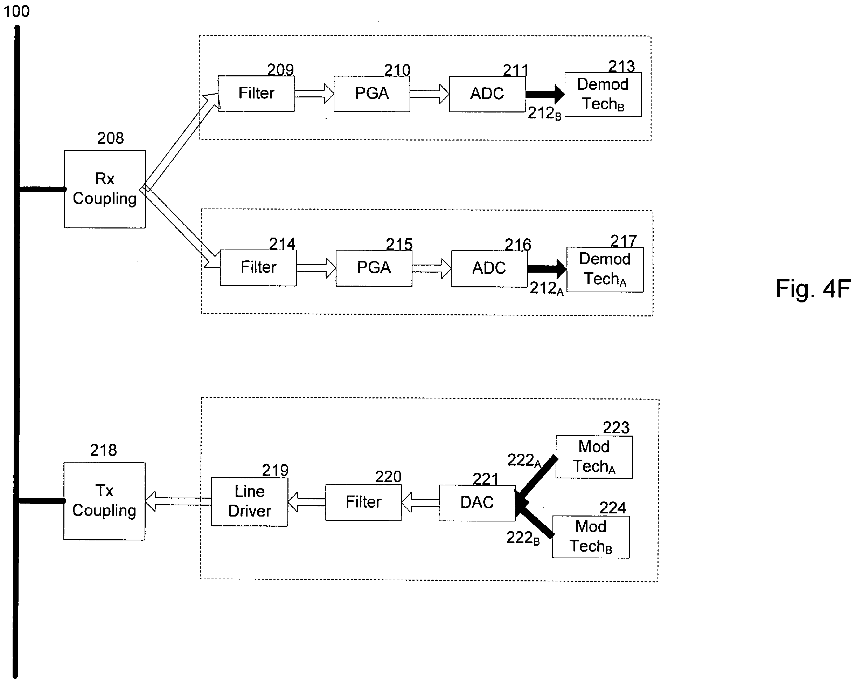

Figure 4f shows a fourth embodiment of the improved network interface device, applied to two different wideband technologies as in Figure 4e. Whilst there are many possible other combinations, it is important to note that it is not necessary for there to be separate paths and converters for the high band paths and low band paths in either the receiver or transmitter, as communications in one direction may benefit more from the improved network interface device than communications in the other direction.

Referring to Figure 4f, the improved network interface device comprises one coupling unit for transmission 218 and one for reception 208. The high band is isolated from the low-band on the receiver path, by deliberately inserted filters 209 with high-pass or band-pass characteristics. However, the transmitter modulation schemes are combined in the digital domain 222A, 222B and then passed through a very high performance DAC 221, smoothing filter 220 and line driver 219. Whilst the fourth embodiment is in theory a possible alternative, in reality it would probably be too expensive and technically challenging to implement with the bands and bps/Hz expected of a performing powerline network.

### 6. Integrated Circuit Embodiment of the Improved Network Interface Device

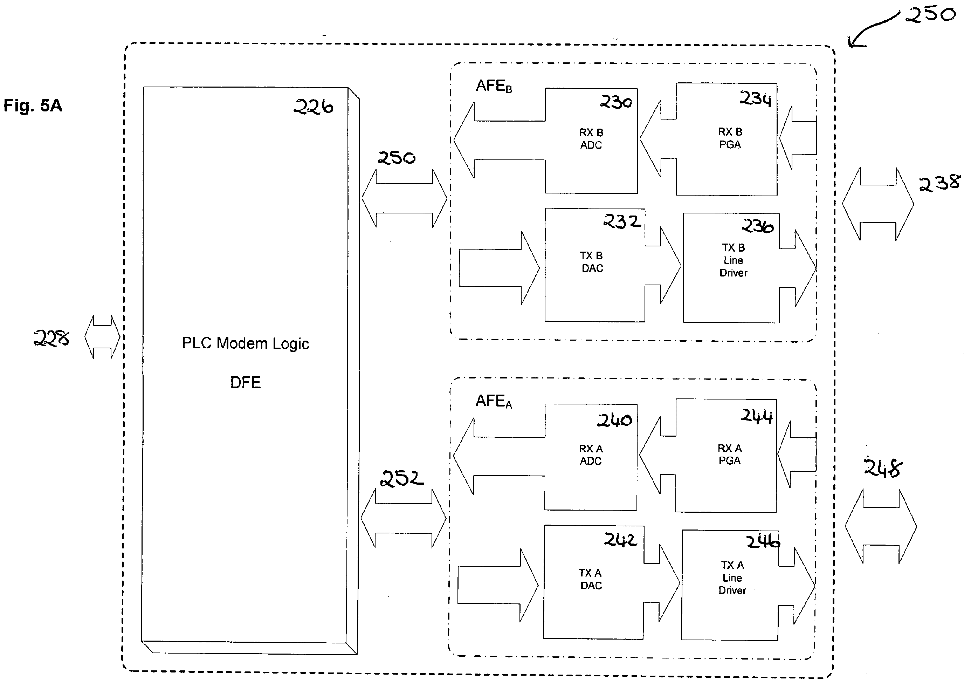

Referring to Figure 5a, an exemplary integrated circuit 250 implementation of the improved network interface device comprises two analogue front ends AFE_{A}, AFE_{B} for the two widebands of the improved powerline communication device. The exemplary integrated circuit 250 also comprises a logic element 226 to implement the different powerline modem technologies (including DFE and MAC) and provide a digital interface to the next stage application 228 in the device.

The high band analogue front end (AFE_{B}) contains high band converters 230, 232 and active interface electronics (i.e. a PGA 234 and line driver 236) and connects to the powerline via a coupling unit along path 238. The low band analogue front end (AFE_{A}) comprises low band converters 240, 242 and active interface electronics (i.e. a PGA 244 and line driver 246) and connects to the powerline via a coupling unit along path 248.

A digital representation of the signal to be sent on the low band and high band is produced in the logic element 226 and is present at interfaces 250, 252 to the analogue front ends AFE_{A}, AFE_{B}.

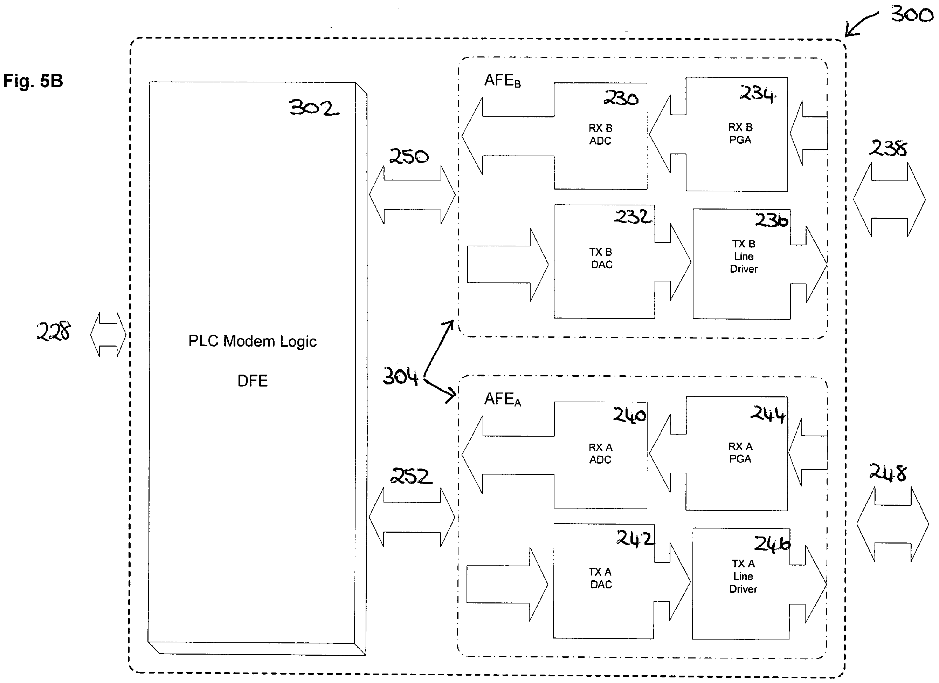

Referring to Figure 5b, in an alternative integration partition 300 of the integrated circuit implementation of the improved network interface device, there are two integrated circuits, namely a digital modem integrated circuit 302 and an analogue modem integrated circuit 304 containing the two analogue front ends AFE_{A}, AFE_{B}.

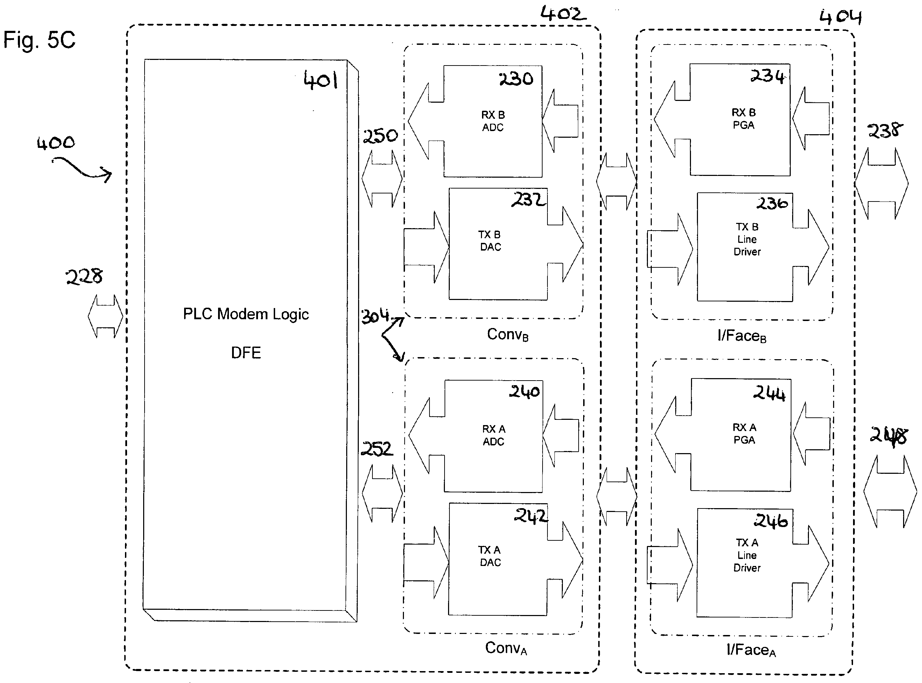

Referring to Figure 5c, in another integration partition 400 of the integrated circuit implementation of the improved network interface device, the analogue front end of each wideband is split into data converters Conv_{A}, Conv_{B} and interface circuits I/Face_{A}, I/Face_{B}. In this case, the converters Conv_{A}, Conv_{B} are integrated with the digital logic 401 of the powerline modem in one integrated circuit 402 while the higher current/voltage interface circuitry is provided in another integrated circuit 404.

It will be appreciated that there are numerous other possibilities including the embedding of all or part of the active electronics within other devices in the system, or the use of discrete blocks for various blocks.

### 6(a) Implementation of the Coupling Unit

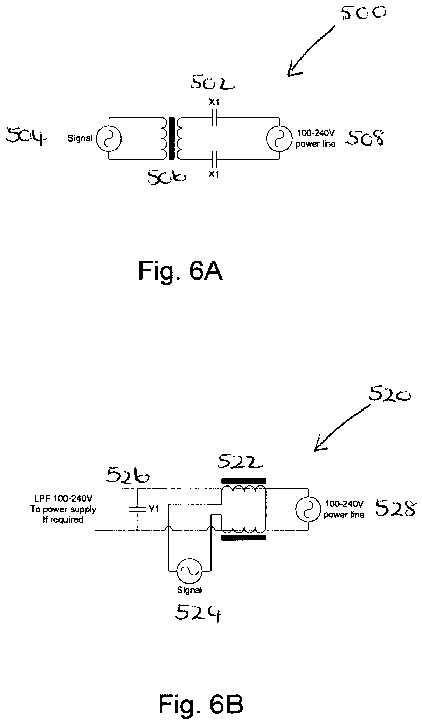

As mentioned before, a coupling unit can have frequency characteristics. Referring to Figure 6a, a capacitive coupling unit 500 comprises X1 type capacitors 502 that are used to couple a signal source 504 (via an isolating transformer 506) onto a powerline 508. In this case, the impedances of the transformer 506, capacitors 502, signal source 504 and the powerline 508 determine the frequency response of the capacitive coupling unit 500.

Referring to Figure 6b, an inductive coupling unit 520 comprises a signal transformer 522 that inductively couples a signal 524 in tandem with a Y1 type capacitor 526. The inductive coupling unit 520 is roughly equivalent to the capacitive coupling unit 500 (depicted in Figure 6a), with the respective impedances of the transformer 522, capacitor 526, signal source 524 and powerline 528 determining the frequency response of the inductive coupling unit 520.

Furthermore, a low-pass filtered version of the powerline 508, 528 can be used within the improved network interface device to provide a power supply. It is also possible to implement higher order filters in the coupling units with more passive components. Nonetheless, it will be appreciated that it is possible to employ many other types of coupling unit (e.g. optical coupling units) in the powerline network interface device.

### 7. Mechanism for Analogue Separation of Different Powerline Technologies

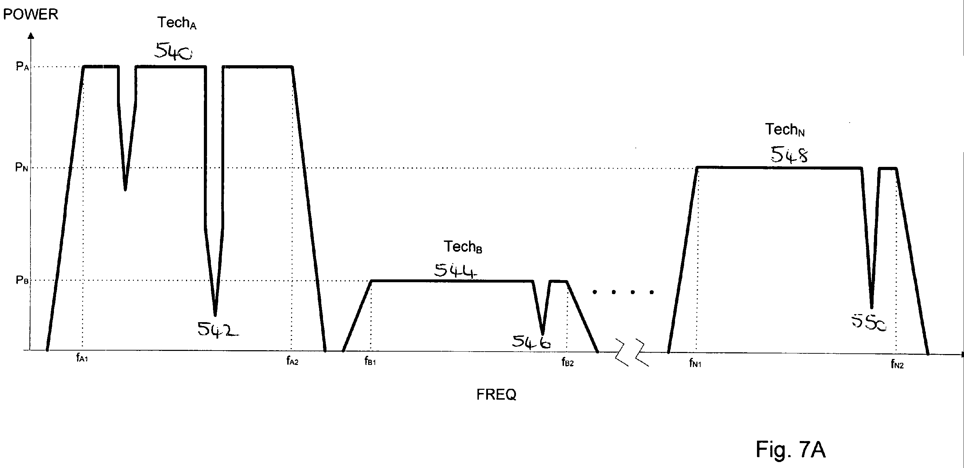

Figures 7a to 7c illustrates the exemplary frequency spectra of a number of different powerline technologies, and demonstrates how an analogue filtering means could be used to separate the signals of a given technology (from the signals of the other technologies) into a particular signal path.

Referring to Figure 7a, a first technology Tech_{A} has a transmission power P_{A} and a wide-band 540 delimited by frequencies f_{A1} and f_{A2}. The wide-band 540 has internal notches 542 to comply with EMC regulations. A second technology Tech_{B} has a transmission power of P_{B} and a wide-band 544 delimited by frequencies f_{B1} and f_{B2}. The wide-band 544 also has a notch 546 to comply with EMC regulations. It should be noted that f_{B1} must be greater than f_{A2} to avoid band-overlapping. Finally, a third technology Tech_{N}, has transmission power P_{N} and a wide-band 548 delimited by frequencies f_{N1} and f_{N2}. The wide-band 548 also has a notch 550 to comply with regulations. The minimum wide-band frequency supported by the powerline technologies communicated by the powerline network system is 10 MHz.

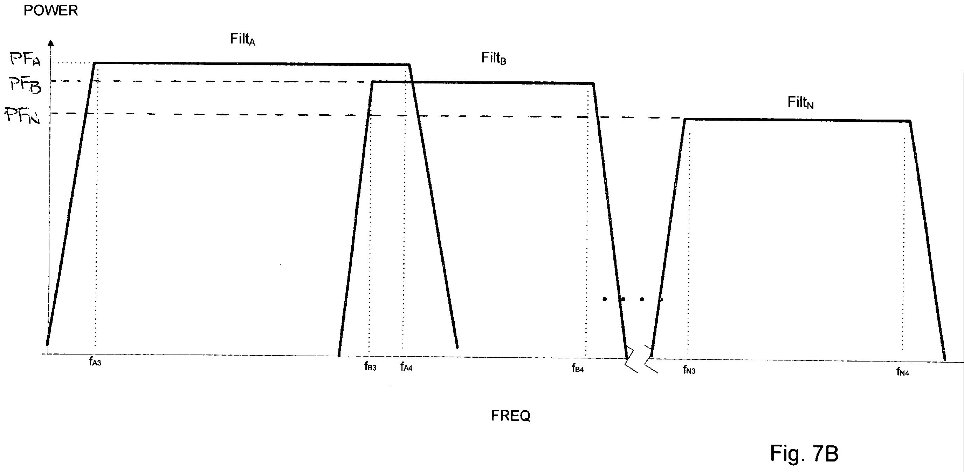

Referring to Figure 7b a first, second and third analogue filter (namely Filt_{A}, Filt_{B} and Filt_{N} respectively) respectively isolate the signals from each of Tech_{A}, Tech_{B} and Tech_{N}, from the signals from the other technologies. The analogue filter characteristics are applicable to the transmitter and/or the receiver of each technology within a node.

The first analogue filter Filt_{A} is defined by passband start and end frequencies f_{A3}, f_{A4}. Similarly the second analogue filter Filt_{B} is defined by passband start and end frequencies f_{B3} and f_{B4}. Finally, the third analogue filter Filt_{N} is defined by passband start and end frequencies f_{N3} and f_{N4}.

The start of at least one of the passbands of the analogue separating means of the powerline communication device is between 1 MHz and 30MHz, and is at least 10MHz in width. At least one of the other bands exists at a frequency greater than 30MHz and less than 1 GHz. The difference between the passband and stopband for any one of the elements of the analogue separating means is more than 6dB.

It should be noted that it is possible for different analogue filters to overlap (e.g. f_{A4}>f_{B3}), or not to overlap (e.g. f_{B4}<f_{N3}). It should also be noted that it is not necessary for the passbands of all of the analogue filters to have the same transmission power. The product of the analogue filter characteristic and the modulation scheme of a given PLC technology determines the effectiveness of the isolation by each analogue filter. The absolute transmission of the filters in their respective passbands is less important than the ratio of passband to stopband, as any attenuation differences in these filters can often be compensated for with more injected power at the pre-filter stage and/or increased receiver sensitivity.

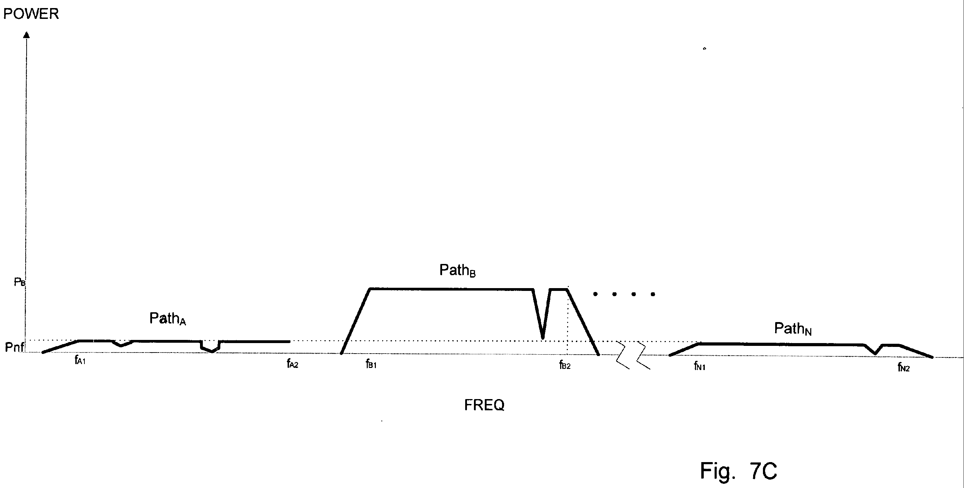

Figure 7c shows an example of the isolation provided by the second analogue filter Filt_{B} to the Tech_{B} signal. In use, the second analogue filter passes a signal Path_{B} that is the product of the transmission power (PF_{B}) of then passband of the second analogue filter and the transmission power (P_{B}) of the Tech_{B} signal. The signals of the other technologies (Tech_{A} and Tech_{N}) are attenuated by the stopband of Filt_{B} to a power level PF_{N} that is sufficiently less than PF_{B} to ensure that they do not significantly interfere with the Path_{B} signal.

### 8. Exemplary Use of the Improve Powerline Communication Network in a Domestic Context

One of the important advantages of the multi-wideband concept implemented in the improved powerline communication network is the ability to provide increased throughput as the number of nodes increase in the network. In particular, such increased throughput demand typically coincides with an increased number of nodes, since more data needs to be transmitted when multiple devices share the network.

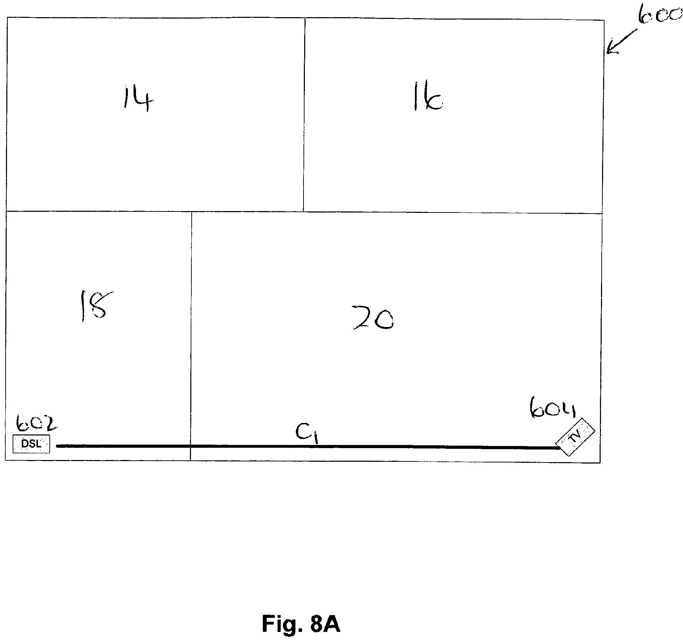

Figure 8a shows a simple initial installation of a single service, in this case IPTV delivered to the home 600 (depicted in Figure 1) via a DSL connection 602, which is distributed (using the improved powerline communication network) from the DSL modem 602 in the office to a TV set 604 in the living room. Since the distance between the DSL modem 602 and the TV set 604 is comparatively long, the connection C1 therebetween predominantly uses the low band due to its inherently greater coverage.
The bandwidth provided by the low band is sufficient for the TV set because only a single TV channel is transmitted.

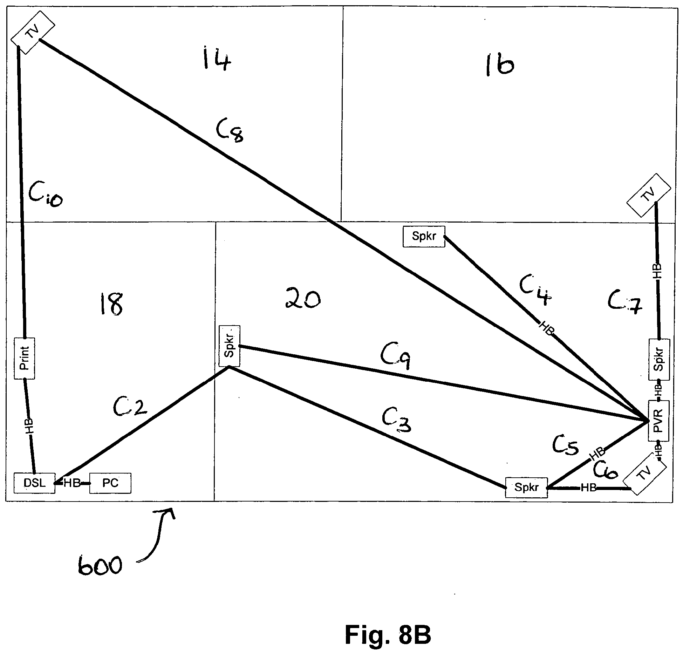

As an improved powerline communication network grows (i.e. more nodes are added to it) the average distances between nodes tends to decrease. When a very complex situation is installed like that depicted in Figure 8b (showing a complex in-home multimedia network with multiple simultaneous video and audio streams), connections C2-C7 are predominantly implemented using the high band (due to its greater throughput) over the relatively short distances present. Low band connections C8, C9, will still be in use when their efficiency is higher than using multiple hops of high band links. In addition, many connections (e.g. C10) will be served by communication using both bands.

In use, a node on the network will typically discover the other nodes on the powerline through some form of synchronisation that is usually defined within the powerline technology used in one of the bands. The node will also identify the technology capabilities and virtual network membership of the detected nodes, to determine what communication will be possible and/or allowable (for instance, whilst a detected node may physically have certain technology capabilities, these may be impaired by interference or restricted in use). Having identified the physically possible and allowable communications, the sending node will decide the best path for sending/receiving data, based on factors such as the type of data to be communicated, how it is ranked in the QoS and the available channel capacity.

Modifications and alterations may be made to the above without departing from the scope of the invention.

## Claims

1. A device for communicating over a powerline comprising a means of simultaneously sending and/or receiving data over a plurality of wideband frequency bands, wherein the wideband frequency bands comprise one or more wideband frequency bands of frequency greater than 30MHz, wherein the device comprises an analogue filtering means of separating individual wideband frequency bands from the plurality of wideband frequency bands, and wherein the device comprises a decision logic component that determines which one of a plurality of powerline technologies enabling bi-directional communication between devices connected to a powerline and their associated wideband frequency bands to use for sending or receiving data.

2. Device as claimed in claim 1 wherein the wideband frequency bands comprise one or more wideband frequency bands of frequency less than 30MHz.

3. A device as claimed in claim 1 wherein the device comprises:
(a) a means of connecting to a powerline network; and
(b) a means of detecting one or more other devices on the network; wherein
the decision logic component comprises a means of assessing the quality and/or availability of the connections between the powerline communication device and the other devices on the network to determine which one of a plurality of powerline technologies enabling bi-directional communication between devices connected to a powerline and their associated wideband frequency band(s) to employ to communicate with one or more of the other devices.

4. A device as claimed in any of the preceding claims wherein the device comprises a means of communicating signals at different power levels in different wideband frequency bands.

5. A system for communicating over a powerline comprising
the device for communicating over a powerline as claimed in any of the preceding claims;
a means of connecting to the powerline; and
a means for transmitting data from the device to appropriate applications or transmitting data from the applications to the device.

6. A method of communicating over a powerline comprising simultaneously sending and/or receiving data over a plurality of wideband frequency bands, wherein the wideband frequency bands comprise one or more wideband frequency bands of frequency greater than 30MHz, wherein the method comprises the step of employing an analogue means to separate individual wideband frequency bands from the plurality of wideband frequency bands, and wherein the method comprises the step of deciding which one of a plurality of powerline technologies enabling bi-directional communication between devices connected to a powerline and their associated wideband frequency bands to use for sending and/or receiving data.

7. A method as claimed in claim 6 wherein the wideband frequency bands comprise one or more wideband frequency bands of frequency less than 30MHz.

8. A method as claimed in claim 6 wherein the method comprises the steps of:
(a) connecting to a powerline network;
(b) detecting one or more devices connected to the powerline network;
(c) assessing the quality and/or availability of connections to the devices;
(d) using the assessment of the quality of connections to the devices to decide which one of a plurality of powerline technologies enabling bidirectional communication between devices connected to a powerlineand their associated wideband frequency bands to use for sending and/or receiving data.

9. A method as claimed in any one of claims 6 to 8 wherein the method comprises the step of communicating signals at different power levels in different wideband frequency bands.

10. A powerline communication network comprising at least one of the powerline communication devices as claimed in claims 1 to 4.

11. A method of communicating in the powerline communication network of claim 10 comprising the method of claims 6 to 9.

## Patentansprüche

1. Vorrichtung zum Kommunizieren über eine Stromleitung (Powerline), die eine Einrichtung zum gleichzeitigen Senden und/oder Empfangen von Daten über eine Mehrzahl Breitband-Frequenzbänder umfasst, wobei die Breitband-Frequenzbänder ein oder mehrere Breitband-Frequenzbänder mit einer Frequenz von mehr als 30 MHz umfassen, wobei die Vorrichtung eine analoge Filtereinrichtung zum Trennen einzelner Breitband-Frequenzbänder von der Mehrzahl Breitband-Frequenzbänder umfasst, und wobei die Vorrichtung eine Entscheidungslogikkomponente umfasst, die bestimmt, welche einer Mehrzahl Powerline-Technologien, die eine bidirektionale Kommunikation zwischen an eine Stromleitung angeschlossenen Vorrichtungen und deren zugeordneten Breitband-Frequenzbändern ermöglichen, zum Senden oder Empfangen von Daten verwendet werden soll.

2. Vorrichtung nach Anspruch 1, wobei die Breitband-Frequenzbänder ein oder mehrere Breitband-Frequenzbänder mit einer Frequenz von weniger als 30 MHz umfassen.

3. Vorrichtung nach Anspruch 1, wobei die Vorrichtung umfasst:
(a) eine Einrichtung zum Anschließen an ein Stromleitungsnetzwerk und
(b) eine Einrichtung zum Erkennen einer oder mehrerer anderer Vorrichtungen im Netzwerk, wobei
- die Entscheidungslogikkomponente eine Einrichtung zum Bewerten der Qualität und/oder Verfügbarkeit der Verbindungen zwischen der Stromleitungskommunikationsvorrichtung und den anderen Vorrichtungen im Netzwerk umfasst, um zu bestimmen, welche einer Mehrzahl Powerline-Technologien, die eine bidirektionale Kommunikation zwischen an eine Stromleitung angeschlossenen Vorrichtungen und deren zugeordnetem Frequenzband oder zugeordneten Frequenzbändern ermöglichen, zum Kommunizieren mit einer oder mehreren der anderen Vorrichtungen eingesetzt werden soll.

4. Vorrichtung nach einem der vorhergehenden Ansprüche, wobei die Vorrichtung eine Einrichtung zum Kommunizieren von Signalen mit unterschiedlichen Leistungspegeln in unterschiedlichen Breitband-Frequenzbändern umfasst.

5. System zum Kommunizieren über eine Stromleitung (Powerline), das umfasst:
- die Vorrichtung zum Kommunizieren über eine Stromleitung nach einem der vorhergehenden Ansprüche,
- eine Einrichtung zum Anschließen an die Stromleitung und
- eine Einrichtung zum Senden von Daten von der Vorrichtung an geeignete Anwendungen oder zum Senden von Daten von den Anwendungen an die Vorrichtung.

6. Verfahren zum Kommunizieren über eine Stromleitung (Powerline), das ein gleichzeitiges Senden und/oder Empfangen von Daten über eine Mehrzahl Breitband-Frequenzbänder umfasst, wobei die Breitband-Frequenzbänder ein oder mehrere Breitband-Frequenzbänder mit einer Frequenz von mehr als 30 MHz umfassen, wobei das Verfahren den Schritt des Einsetzens einer analogen Einrichtung zum Trennen einzelner Breitband-Frequenzbänder von der Mehrzahl Breitband-Frequenzbänder umfasst, und wobei das Verfahren den Schritt des Entscheidens umfasst, welche einer Mehrzahl Powerline-Technologien, die eine bidirektionale Kommunikation zwischen an eine Stromleitung angeschlossenen Vorrichtungen und deren zugeordneten Breitband-Frequenzbändern ermöglichen, zum Senden oder Empfangen von Daten verwendet werden soll.

7. Verfahren nach Anspruch 6, wobei die Breitband-Frequenzbänder ein oder mehrere Breitband-Frequenzbänder mit einer Frequenz von weniger als 30 MHz umfassen.

8. Verfahren nach Anspruch 6, wobei das Verfahren die Schritte umfasst:
(a) Anschließen an ein Stromleitungsnetzwerk,
(b) Erkennen einer oder mehrerer Vorrichtungen, die an das Stromleitungsnetzwerk angeschlossen sind,
(c) Bewerten der Qualität und/oder Verfügbarkeit von Verbindungen mit den Vorrichtungen,
(d) Verwenden der Bewertung der Qualität von Verbindungen mit den Einrichtungen, um zu entscheiden, welche einer Mehrzahl Powerline-Technologien, die eine bidirektionale Kommunikation zwischen an eine Stromleitung angeschlossenen Vorrichtungen und deren zugeordneten Frequenzbändern ermöglichen, zum Senden oder Empfangen von Daten verwendet werden soll.

9. Verfahren nach einem der Ansprüche 6 bis 8, wobei das Verfahren den Schritt des Kommunizierens von Signalen mit unterschiedlichen Leistungspegeln in unterschiedlichen Breitband-Frequenzbändern umfasst.

10. Stromleitungskommunikationsnetzwerk, das wenigstens eine der Stromleitungskommunikationsvorrichtungen nach den Ansprüchen 1 bis 4 umfasst.

11. Verfahren zum Kommunizieren in dem Stromleitungskommunikationsnetzwerk nach Anspruch 10, das das Verfahren nach den Ansprüchen 6 bis 9 umfasst.

## Revendications

1. Dispositif permettant de communiquer sur une ligne électrique comprenant un moyen d'envoyer simultanément et/ou de recevoir des données sur une pluralité de bandes de fréquences à large bande, dans lequel les bandes de fréquences à large bande comprennent une ou plusieurs bandes de fréquences à large bande d'une fréquence supérieure à 30 MHz, dans lequel le dispositif comprend un moyen de filtrage analogue de séparation de bandes de fréquences à large bande individuelles à partir de la pluralité de bandes de fréquences à large bande, et dans lequel le dispositif comprend un composant logique de décision qui détermine laquelle parmi une pluralité de technologies de lignes électriques permettant une communication bidirectionnelle entre des dispositifs connectés à une ligne électrique et leurs bandes de fréquences à large bande associées utiliser pour envoyer ou recevoir des données.

2. Dispositif selon la revendication 1, dans lequel les bandes de fréquences à large bande comprennent une ou plusieurs bandes de fréquences à large bande d'une fréquence inférieure à 30 MHz.

3. Dispositif selon la revendication 1, dans lequel le dispositif comprend :
(a) un moyen de se connecter à un réseau de lignes électriques ; et
(b) un moyen de détecter un ou plusieurs autres dispositifs sur le réseau ; dans lequel
le composant logique de décision comprend un moyen d'évaluer la qualité et/ou la disponibilité des connexions entre le dispositif de communication de lignes électriques et les autres dispositifs sur le réseau pour déterminer laquelle parmi une pluralité de technologies de lignes électriques permettant une communication bidirectionnelle entre des dispositifs connectés à une ligne électrique et leurs bandes de fréquences à large bande associées utiliser pour communiquer avec un ou plusieurs des autres dispositifs.

4. Dispositif selon l'une quelconque des revendications précédentes, dans lequel le dispositif comprend un moyen de communiquer des signaux au niveau de différents niveaux de puissance dans différentes bandes de fréquences à large bande.

5. Système permettant de communiquer sur une ligne électrique comprenant :
le dispositif de communiquer sur une ligne électrique selon l'une quelconque des revendications précédentes ;
un moyen de se connecter à la ligne électrique ; et
un moyen de transmettre des données à partir du dispositif à des applications appropriées ou de transmettre des données à partir des applications au dispositif.

6. Procédé de communication sur une ligne électrique comprenant simultanément l'envoi et/ou la réception de données sur une pluralité de bandes de fréquences à large bande, dans lequel les bandes de fréquences à large bande comprennent une ou plusieurs bandes de fréquences à large bande d'une fréquence supérieure à 30 MHz, dans lequel le procédé comprend l'étape d'utilisation d'un moyen analogue pour séparer des bandes de fréquences à large bande individuelles à partir de la pluralité de bandes de fréquences à large bande, et dans lequel le procédé comprend l'étape de décision de laquelle parmi une pluralité de technologies de lignes électriques permettant une communication bidirectionnelle entre des dispositifs connectés à une ligne électrique et leurs bandes de fréquences à large bande associées utiliser pour envoyer et/ou recevoir des données.

7. Procédé selon la revendication 6, dans lequel les bandes de fréquences à large bande comprennent une ou plusieurs bandes de fréquences à large bande d'une fréquence inférieure à 30 MHz.

8. Procédé selon la revendication 6, dans lequel le dispositif comprend les étapes de :
(a) connexion à un réseau de lignes électriques ;
(b) détection d'un ou plusieurs dispositifs connectés au réseau de lignes électriques ;
(c) évaluation de la qualité et/ou de la disponibilité des connexions aux dispositifs ;
(d) utilisation de l'évaluation de la qualité des connexions aux dispositifs pour décider laquelle parmi une pluralité de technologies de lignes électriques permettant une communication bidirectionnelle entre des dispositifs connectés à une ligne électrique et leurs bandes de fréquences à large bande associées utiliser pour envoyer et/ou recevoir des données.

9. Procédé selon l'une quelconque des revendications 6 à 8, dans lequel le procédé comprend l'étape de communication de signaux à différents niveaux de puissance dans différentes bandes de fréquences à large bande.

10. Réseau de communication de lignes électriques comprenant au moins un des dispositifs de communication de lignes électriques selon les revendications 1 à 4.

11. Procédé de communication dans le réseau de communication de lignes électriques selon la revendication 10 comprenant le procédé selon les revendications 6 à 9.
